# EUROPEAN PATENT APPLICATION

(11) **EP 1 749 641 A1**
(43) Date of publication of application: **07.02.2007**
(21) Application number: 06117705.1
(22) Date of filing: 24.07.2006
(51) Int. Cl.: B29C 65/04

(54) **Dielectric welding**

(30) Priority: 04.08.2005 GB 0515981; 28.11.2005 GB 0524175
(71) Applicant: Stanelco RF Technologies Ltd., Marchwood, Southampton SO40 4BL (GB)
(72) Inventor: Smith, David John Stanelco RF Technologies Limited, Southampton, Hampshire SO40 2HG (GB); Grimes, Ryan Stanelco RF Technologies Limited, Wickham, Hampshire PO17 5HQ (GB); Loutit, Magnus John Stanelco RF Technologies Ltd., Southampton, Hampshire SO15 5DL (GB); Sofield, Carl John, Didcot, Oxfordshire OX11 0JS (GB); Koltsov, Denis Konstantinovich, Brookhouse, Lancashire LA2 9JG (GB)
(74) Representative: Mansfield, Peter Turquand

(57) **Abstract**

An apparatus for dielectric welding has an opposed pair of relatively movable electrodes (14, 12), each incorporating an electrically conducting element with a working surface close to and opposed to that of the other electrode. There is a gap (15) between the electrodes, such that a material to be welded may be placed in the gap and may be pressed between the electrodes, and radio frequency signals are supplied (16, 18) to the electrodes. At least one of the electrodes (14) incorporates a layer (14b) of dielectric material covering the conducting element (14a) both on the working surface and on surfaces which are alongside the working surface, so that the dielectric material (14b) defines at least part of the gap (15). The thickness covering the working surface is significantly less than that covering the alongside surfaces. During welding of a material, the parts of the material alongside those subjected to dielectric welding are compressed together by the layers (14b) of dielectric material, which squeezes any liquid away from the dielectric welding region, reducing the associated risk of arcing.

## Description

This invention relates to an apparatus and a process for performing dielectric welding, for example for welding sheets of a polymeric material.

The welding of thermoplastic polymeric films using dielectric heating (which may also be referred to as radio frequency heating or high frequency heating) has been known for many years. In this process the two films of thermoplastic material are positioned between opposed electrodes (or one electrode and a base plate), the electrodes are pressed together, and a radio frequency voltage is applied between the electrodes. This process is applicable to materials which have a significant dielectric loss index, for example greater than 0.2, at an appropriate frequency in the frequency range say 20-60 MHz. Suitable thermoplastic materials are polyvinyl chloride and polyurethane, amongst many others. An improved way of performing such welding has now been developed.

According to the present invention there is provided an apparatus for dielectric welding of a material, the apparatus comprising an opposed pair of relatively movable electrodes, each electrode incorporating an electrically conducting element with a working surface close to and opposed to the working surface of the electrically conducting element of the other electrode, there being a gap between the electrodes, such that the material to be welded may be placed in the gap and may be pressed between the electrodes, the apparatus also comprising means to supply radio frequency signals to the electrodes, wherein at least one of the electrodes comprises a layer of dielectric material on the working surface and also on surfaces of the conducting element which are alongside the working surface, the gap being defined at least in part by the said layers of dielectric material on the alongside surfaces, the thickness of the dielectric material on the alongside surfaces being greater than that on the working surface, and the dielectric material on both the entire working surface and the alongside surfaces being in intimate contact with the electrically conducting element.

Preferably, at least in the electrode incorporating the said layers of dielectric material, the electrically conducting element is shaped such that the the working surface is, at least in part, convexly curved. This ensures that the working surface has no abrupt corners in proximity to the other electrode, and so reduces the peak electric fields that would otherwise occur at sharp corners.

In one example one electrode has a markedly wider working surface than the other, the other electrode comprising a narrow bar which defines the line along which welding will occur. If such a pair of electrodes are used to bring about dielectric welding of sheets of material, then when the electrodes are moved together the layers of dielectric material alongside the working surface of the bar rest on the sheet of material, and reduce the tendency for the heated parts of the sheets to undergo plastic deformation while undergoing welding. In another example both electrodes have substantially the same width of working surface, for example both comprising a narrow bar, and in this case preferably both electrodes include layers of dielectric material on surfaces of the conducting element which are alongside the working surface, so increasing the overall width of the electrodes.

The layer of dielectric material on the working surface is preferably integral with the dielectric material on the surfaces alongside the working surface. The electrode preferably has a flat face adjacent to the gap, while the working surface of the conducting element may have a different shape, and is preferably curved convexly. Such a convexly-curved working surface concentrates the electric field (and therefore the dielectric welding effect) at the centre of the width of the working surface, as that is where the working surfaces of the two electrodes are closest together. It may for example have a part-oval curvature. In a preferred embodiment the working surface is curved cylindrically, the radius of curvature being at least half the separation between the alongside surfaces. The thickness of the dielectric material on the working surface, at its thinnest point, is preferably in the range 50 µm to 500 µm, more preferably between 100 µm and 300 µm, for example 200 µm; the thickness of the dielectric material on the alongside surfaces is preferably at least 1 mm, and may be several millimetres.

The layers of dielectric material on the alongside surfaces provide the benefit of spreading the load over a wider area than that of the conducting element, when the electrodes are moved together to compress the material that is to be welded. For example in the case of welding a cover film on to a tray containing foodstuffs, this spreading of the load ensures that any food contamination such as oil, water, juice, blood or sauce is squeezed out of the zone in which dielectric welding occurs. In this context, the use of a narrower conducting element in the electrode that contacts the cover film than the conducting element in the electrode that contacts the tray has the benefit that the dielectric heating effect occurs predominantly in the material closer to the narrower conducting element, and therefore in the vicinity of the interface between the cover film and the tray, so optimising the welding process.

To ensure intimate contact between the electrically conducting element and the dielectric materials on the working surface and the alongside surfaces, the dielectric materials may be cast around the electrically conducting element. The electrically conducting element may be a hollow shell, the wall thickness of the shell being the equivalent of several skin depths at the operating frequency, for example being of thickness between 30 and 150 µm, and in this case the volume within the hollow shell would also be filled with a poor thermal conductor, for example with a polymeric material which is preferably the same as the dielectric materials on the working surface and the alongside surfaces.

To ensure that dielectric heating occurs only in the vicinity of the weld region, particularly in the case where one electrode has a significantly narrower working surface than the other, a third electrode may be provided adjacent to and alongside the electrode with the narrower working surface, held at the same potential as the electrode with the wider working surface, and separated from the narrower conducting element by the dielectric material. This ensures that there is no dielectric heating effect between the third electrode and the electrode with the wider working surface (as they are at the same electrical potential), although it clearly requires that the dielectric material between the narrower conducting element and the third electrode be a low loss dielectric.

It will be appreciated that the nature of the electrodes will depend upon the process that is being performed. The electrodes may be shaped so as to form a plurality of welds simultaneously.

The electrical connections to the electrodes will depend on the form of the electrodes, and whether substantial or continuous movement of the electrodes is required. For example electrical conductors may be attached to the electrodes, or contact may be made by spring contacts, or there may be capacitive coupling.

The radio frequency supply may in principle be at a frequency between 1 MHz and 200 MHz, usually between 10 MHz and 100 MHz, but stringent limits are imposed on any emitted radio waves. In practice therefore the choice of frequency may be more limited. For example the supply frequency may be 27.12 MHz, or 40.68 MHz. Preferably the radio-frequency signal generator is a solid-state device, and the signals are supplied via a matching network. The matching network preferably is an active matching network, which may include an inductor, and with at least one variable capacitor controlled by a servo motor; it monitors the radio frequency current and voltage, and automatically adjusts the value of the or each variable capacitor in accordance with variations in the load. This may for example be such that the impedance presented to the generator remains at a constant value such as 50 Ω.

The invention will now be further and more particularly described, by way of example only, and with reference to the accompanying drawings in which:
Figure 1 shows a diagrammatic sectional view of a dielectric welding apparatus;
Figures 2a and 2b show sectional views of modifications to the apparatus of figure 1;
Figure 3 shows a diagrammatic sectional view of a dielectric welding apparatus for welding food packages; and
Figure 4 shows a sectional view of a modification to the apparatus of figure 3.

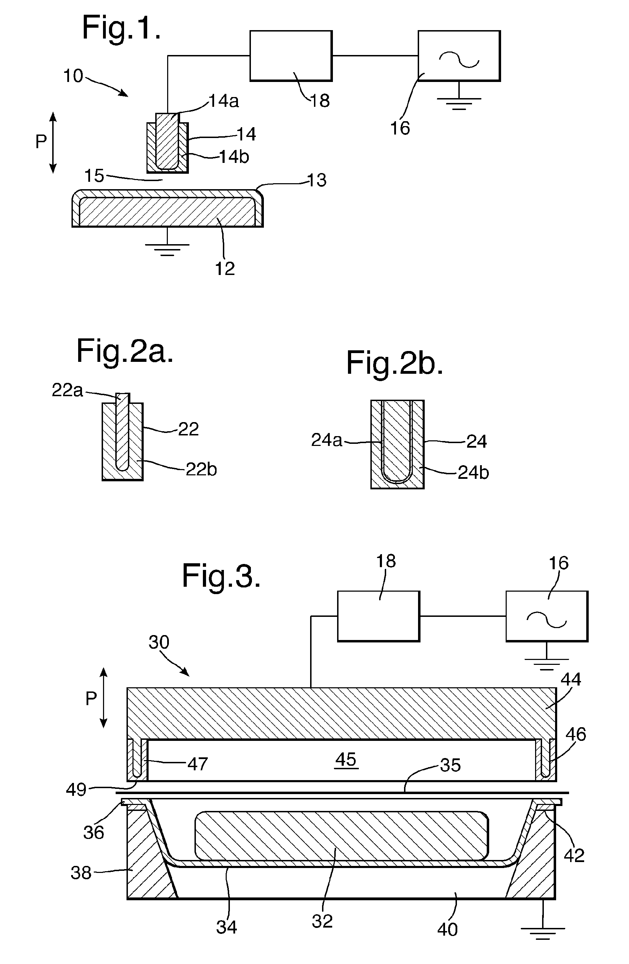

Referring to figure 1 there is shown a dielectric welding apparatus 10 which incorporates two electrodes: a lower electrode 12 of stainless steel with a flat upper surface coated with an electrically insulating material 13 that is not dielectrically heated, for example PFA (perfluoro alkoxyalkane), and an upper electrode 14 consisting of a straight narrow bar 14a of thickness 2.5 mm whose lower corners are rounded with a radius of curvature of 0.5 mm, and embedded in a low-loss dielectric material 14b forming 1.5 mm thick layers, one on each side, and the thickness being only 200 µm along the centreline of the underside, the electrode 14 having a flat lower surface of width 5.5 mm. This dielectric material 14b may be epoxy resin, or another polymer such as polytetrafluoroethylene (PTFE). With epoxy resin, the upper electrode 14 can be made by casting, while the bar 14a is held in a mould; this casting (or "potting") process preferably involves subjecting the resin and mould to a vacuum while the resin is fluid, to ensure removal of any air, followed by curing. An alternative process involves injection moulding the dielectric material onto the bar 14a.

During operation of the apparatus 10, sheets (not shown) of plastic material to be welded are inserted into the gap 15 between the upper electrode 14 and the lower electrode 12, and the upper electrode 14 is moved downwards to compress the plastic material while RF signals are applied so that dielectric welding takes place. The apparatus 10 forms a straight weld of width slightly more than 1.5 mm, corresponding to the width of the flat part of the lower face of the narrow bar 14a. Once the weld has been formed, the upper electrode 14 is raised back to its original position. The movements of the upper electrode 14 are indicated by the double headed arrow P.

A benefit of this design of electrode, in which the working surface of the upper electrode 14 does not have sharp corners, is that there is no electric field concentration (with associated dielectric heating) adjacent to the corners. This suppresses the risk of arcing, tracking and ionising during the dielectric welding process. Instead the electric field and the dielectric heating are most intense immediately under the lowest part of the bar 14a, where welding is to be performed. The corners of the lower electrode 12 do not cause such a problem, because the electrode 12 is so much wider than the upper electrode 14, and the corners of the lower electrode 12 are therefore remote from the upper electrode 14.

It will be appreciated that during use the dielectric material 14b is subject to mechanical stresses, and although it is not a high-loss dielectric material, because of its proximity to material undergoing welding it is also subject to thermal fluctuations. It is important to ensure that the material 14b is firmly fixed to the bar 14a, and this can be helped by providing holes (not shown) through the bar 14a which become filled with the dielectric material during the casting or moulding process. Fibrous reinforcing material such as aramid or glass fibre mesh may be embedded in the dielectric material 14b.

The RF signals are supplied by a solid-state RF signal generator 16 through an active matching network 18. The matching network 18 incorporates variable capacitors controlled by servomotors which are operated so that the impedance presented to the generator 16 remains at a constant value such as 50 Ω. The lower electrode 12 is connected to earth, as is the generator 16. It will be appreciated that all the connections that carry signals may use coaxial cables to minimise radiation of energy to the surroundings. The electrically insulating material 13 acts as a barrier material, and is of thickness typically no more than 0.1 mm, for example 50 µm. Another suitable material for the material 13 is parylene, which can be deposited by a vapour-phase deposition and polymerisation process of para-xylylene (or its substituted derivatives), and which has a low dielectric dissipation factor and a high dielectric strength.

Referring now to figure 2a there is shown an alternative electrode 22 for use in place of the upper electrode 14 in the welding apparatus 20. The electrode 22 consists of a narrow metal bar 22a of width 2 mm, with a convexly curved lower surface with cylindrical curvature; this is embedded in a dielectric material 22b, and the electrode 22 is of width 6 mm and has a flat lower surface. As with the electrode 14, the thickness of the dielectric material 22b is much thinner on the lower surface, being only 200 µm along the centreline of the underside. The lower surface of the bar 22a may have a radius of curvature of 1 mm (as shown), or a slightly larger radius such as 1.2 or 1.3 mm, which may be easier to machine. The electrode 22 can be made by a casting or moulding process substantially as described in relation to the electrode 14, using for example epoxy resin, PTFE or polyetheretherketone (PEEK) as the dielectric material 22b, which may optionally be reinforced, for example with glass fibre or aramid fibres. This welding apparatus 20 is used in the same way as the apparatus 10, and the convexly curved lower surface of the bar 22a has the effect of concentrating the electric field and so the heating effect along the centre of the weld line.

Referring now to figure 2b, there is shown another alternative electrode 24 for use in place of the upper electrode 14 in the welding apparatus 20. The electrode 24 consists of a rectangular bar 24b of a low-loss dielectric material such as PTFE of width 6 mm in which is embedded a conducting shell 24a which is U-shaped in cross-section, of total width 2.5 mm. This shell 24a is of thickness 50 µm, and is of a good electric conductor, such as copper or silver. As with the electrodes 14 and 22, the thickness of the dielectric material 24b enclosing the conducting shell 24a is least along the lower surface, being only 200 µm along the centreline of the underside. At a frequency of 27 MHz, for copper, the skin depth is about 12.7 µm, so the shell thickness is several times the skin depth and the shell 24a is therefore equivalent to a solid bar of the same cross-sectional shape in terms of its electrical properties, but thermal conduction through the electrode 24 is significantly less than for an electrode with a solid metal bar, so there is less heat loss from the weld region during use.

Referring now to figure 3, a welding apparatus 30 is shown, partly diagrammatically, for packaging a food product 32 (such as a ready meal) in a stiff, generally rectangular tray 34 of a polymeric material such as crystalline or amorphous polyethylene terephthalate (CPET or APET), that has rounded corners and a peripheral rim 36. The tray 34 is of material of thickness about 450 µm to ensure it is stiff and an adequate oxygen barrier; and the rim 36 is of width 5.5 mm. The apparatus 30 includes a lower aluminium die 38 which defines a generally rectangular aperture 40 into which the tray 34 locates, and the upper surface of the die 38 is covered with a 50 µm dielectric barrier coating 42 for example of parylene or PTFE-impregnated alumina, so that when the tray 34 is located in the aperture 40 its rim 36 is supported by the upper surface of the layer 42 on the die 38. The upper surface of the die 38 is of width 5.0 mm, so the rim 36 projects just beyond its edge. An upper aluminium die 44 has a 10 mm deep recess 45 of the same shape as the aperture 40, surrounded by a ridge 46 of width 2.0 mm with a cylindrically curved lower surface and embedded in a dielectric material 47 (such as epoxy resin) such that there are 1.5 mm thick layers adhering to its inner and outer faces, the thickness of the epoxy being less on the lower surface, and being only about 200 µm along the centreline of the ridge 46. The dielectric material 47 defines a flat lower surface 49 of width 5.0 mm directly opposite the 5.0 mm-wide upper surface of the die 38.

As with the apparatus 10, RF signals are supplied by a solid-state RF signal generator 16 through an active matching network 18. The lower electrode 38 is connected to earth, as is the generator 16.

In use of the apparatus 30, a tray 34 containing the food product 32 is located into the aperture 40. A film 35, for example of amorphous polyethylene terephthalate (APET) of thickness 30 µm, is placed on top of the tray 34, and the upper die 44 is lowered so that the film 35 and the rim 36 are sandwiched between the barrier coating 42 on the die 38, and the lower face 49 of the upper die 44. The generator 16 is then activated (for example for 1.5 seconds), such that the film 35 is welded to the rim 36 of the tray 14. The dielectric welding only occurs directly under the centre of the ridge 46, so the seal line is of width about 1.0 mm. The upper die 44 is then lifted up, and the sealed tray 34 bonded to the film 35 is removed. These repeated movements of the upper die 44 are indicated by the double headed arrow P.

One effect of the wide electrode surface 49 is to ensure that all traces of liquid (such as blood or sauce) that are left on the rim 36 are squeezed away from the vicinity of the region in which dielectric welding takes place - which is the region directly underneath the ridge 46. This minimises the risk of arcing or burning caused by the presence of liquid in the electric field. Similar benefits arise if there are small pieces of soft foodstuff material (such as lettuce, cucumber or ham) left on the rim 36; in such cases welding has been found to take place through the thin residual material. By the same token, air pockets are also eliminated from this welding region, which could potentially undergo ionisation and arcing. Another benefit is that the portions of the film 35 in contact with the inner and outer regions of the dielectric material 47 are not subjected to significant dielectric heating, and so prevent the ridge 46 sinking into the heated part of the film 35; this reduces the variation in the capacitance between the dies 38 and 44 in the course of the welding process.

A benefit of having a narrow working surface (that of the ridge 46) facing the much wider working surface of the lower die 38, in the situation in which the cover film 35 is significantly thinner than the tray 34, is that the dielectric heating effect is greater in the vicinity of the narrower working surface, and is therefore much more intense in the vicinity of the interface between the film 35 and the tray 34. This benefit arises not only if the working surface of the lower electrode is flat, but also if the working surface of the lower electrode were to be convexly curved but with a significantly larger radius of curvature, for example at least three times more, than that of the upper electrode (ridge 46), preferably at least four times more, and embedded in dielectric material so that it has a flat upper surface. In contrast, if both the working surfaces are of the same width, the dielectric heating effect would be most intense at about the midpoint between the working surfaces. It will be appreciated that in either case by appropriate adjustment of the thicknesses of the dielectric material on the opposed working surfaces, the position at which the dielectric heating effect is most intense can be arranged to be at the desired interface. So, for example, if the working surfaces are of the same width, and are to be used to weld a thin cover film onto a thicker tray (as described above), the position of the most intense dielectric heating effect can be adjusted to be close to the tray/film interface by providing thicker dielectric material on the upper working surface than on the lower working surface: to a first approximation, the thickness of the upper dielectric barrier plus that of the film should be equal to the thickness of the lower dielectric barrier plus that of the tray.

It will be appreciated that the apparatus 30 can be used with a wide range of different polymeric trays and films. The tray should be sufficiently thick to be stiff, and is typically of thickness between 300 µm and 750 µm; in contrast the cover sheet is much thinner, typically less than 100 µm, more preferably between 10 µm and 50 µm thick. In the example described above, since no surface bonding layer (of say polyethylene) is required on the sealing film 35, the cost of this sealing film may be reduced. It should nevertheless be appreciated that the sealing film 35 may be a multi-layer laminate, for example with APET as the bottom layer, to provide strength, and one or more other polymers such as ethylene/vinyl alcohol copolymer (EVOH) laminated to it to provide or enhance particular properties such as oxygen impermeability. For example the film 35 might comprise an upper layer 15 µm thick of APET; a 3 µm thick oxygen barrier layer of EVOH; and a lower layer 15 µm thick of APET; these layers may be bonded together by thin layers of adhesive. The proportion of EVOH is sufficiently small that waste film from the manufacturing process can be recycled to form new APET film. The sealing process is remarkably effective, and can provide a good seal despite the presence of contamination on the rim 36, such as traces of blood or fat from the product 32.

It will be appreciated that a welding apparatus may differ from the described above while remaining within the scope of the present invention. For example the upper die 44 may be connected to earth, and the lower die 38 be connected to the RF generator 16. In another modification the dielectric material defining the lower surface 49 may differ from that provided on the inner and outer surfaces of the ridge 46. For example the dielectric material on either side of the ridge 46 might be of PEEK, PTFE or epoxy resin, and the dielectric material on the lower surface may be of parylene, epoxy resin or PTFE. It will also be appreciated that the layers alongside the working surface of the electrode may be attached to the conducting part of the electrode using adhesives or mechanical connections (such as screws) rather than being cast on to the sides. It will also be appreciated that it is not essential for the layers of dielectric material alongside the working surface to extend the entire height of the electrically conducting part; as shown in figures 1 and 2a, the electrically conducting part may project above the dielectric material, but the dielectric material must extend sufficiently high to be firmly adhered to the electrically conducting part, and to have sufficient mechanical strength. It will also be understood that the dimensions are given by way of example only; in a modification, for example, the thickness of dielectric material 47 on the inside and outside of the ridge 46 might be say 0.75 mm, such that the total width of the electrode surface 49 is 3 mm; in this case the lower die 38 might also be modified to have an upper surface of this width.

In another modification the lower die 38, like the upper die 44, has a narrow metal ridge, and this is embedded in dielectric material providing a flat upper surface to support the rim 36. The metal ridge on the lower die 38 must be accurately aligned with the corresponding metal ridge 46 on the upper die 44, as the metal ridges provide the working surfaces between which the polymeric material experiences the greatest dielectric heating effect.

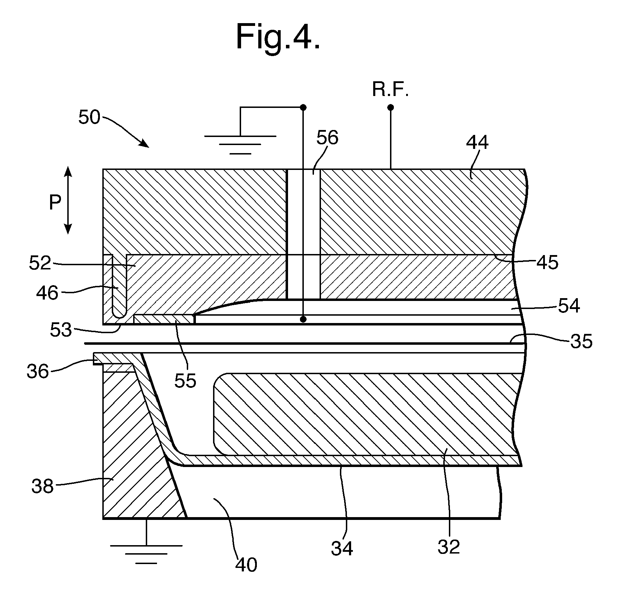

Referring now to figure 4 there is shown, to a larger scale, a welding apparatus 50 which is a modification of the apparatus 30, only the upper die 44 differing significantly from that of figure 3. As with the apparatus 30, the upper aluminium die 44 has a 10 mm deep recess 45 of the same shape as the aperture 40, surrounded by a ridge 46 of width 2.0 mm with a cylindrically curved lower surface. The entire underside of the die 44 is embedded in a dielectric material 52 such as PTFE such that there is a 1.5 mm thick layer adhering to the outer face of the ridge 46, the thickness of the dielectric material 52 being less directly under the ridge 46 and about 200 µm along the centreline of the ridge 46, the dielectric material 52 defining a flat lower surface 53 extending inwardly a distance of around 10 mm, and then forming a shallow recess 54. A flat metal shielding electrode 55, of width 5 mm and of the same shape as the inner edge of the rim 36 of the tray 34, is inset into the dielectric material 52 so that the lower face of the electrode 55 is in the same plane as the surface 53. This shielding electrode 55 is connected to earth via a hole 56 through the upper die 44, so that it is at the same electrical potential as the lower die 38. The outermost edge of the electrode 55 is 1.5 mm inside the inner edge of the ridge 46, and is separated from it by the dielectric material 52 which is a low-loss material.

The apparatus 50 operates in substantially an identical fashion to that described above. When in use, it will be appreciated that the outermost edge of the electrode 55 is directly above the inner edge of the rim 36. Any foodstuffs squeezed off the rim 36 by the pressure exerted between the lower surface 53 and the upper surface of the die 38 may collect just inside the rim 36 on the tray 34 or on the underside of the cover film 35. Such foodstuffs may be very high-loss materials when subjected to dielectric heating, but there is no risk of such materials being heated (or, indeed, overheated) by the dielectric heating process, as they are shielded by the shielding electrode 55.

The thickness of the dielectric material 52 on the outer face of the ridge 46 is not a critical parameter to the welding process. The apparatus 50 may also include a cutting mechanism (not shown) to cut through the film 35 around the outside of the rim 36 once the welding process has been completed. In this case the rim 36 preferably does not project beyond the edge of the lower die 38, so the cutting blades can cut right next to the welding apparatus 50 as shown; the thickness of the dielectric material 52 on the outer face of the ridge 46 consequently limits how close to the weld line the blades can cut.

It will be appreciated that in other situations it may be desirable to provide a greater thickness of dielectric material on the outer face of the ridge 46, and that in some situations it may be appropriate to provide another shielding electrode, outside the ridge 46, this again being separated from the ridge 46 by the dielectric material, and lying in the same plane as the shielding electrode 55.

## Claims

1. An apparatus for dielectric welding of a material, the apparatus comprising an opposed pair of relatively movable electrodes, each electrode incorporating an electrically conducting element with a working surface close to and opposed to the working surface of the electrically conducting element of the other electrode, there being a gap between the electrodes, such that the material to be welded may be placed in the gap and may be pressed between the electrodes, the apparatus also comprising means to supply radio frequency signals to the electrodes, wherein at least one of the electrodes comprises a layer of dielectric material on the working surface and also on surfaces of the conducting element which are alongside the working surface, the gap being defined at least in part by the said layers of dielectric material on the alongside surfaces, the thickness of the dielectric material on the alongside surfaces being greater than that on the working surface, and the dielectric material on both the entire working surface and the alongside surfaces being in intimate contact with the electrically conducting element.

2. An apparatus as claimed in claim 1 wherein in the electrode incorporating the said layers of dielectric material, the electrically conducting element is shaped such that the working surface is, at least in part, convexly curved.

3. An apparatus as claimed in claim 2 wherein in the electrode incorporating the said layers of dielectric material, the working surface of the electrically conducting element is convexly curved cylindrically.

4. An apparatus as claimed in any one of the preceding claims wherein the layer of dielectric material on the working surface is integral with the dielectric material on the surfaces alongside the working surface.

5. An apparatus as claimed in any one of the preceding claims wherein, in at least one of the electrodes, the electrically conducting element is a hollow shell, the shell being filled with a non-conducting material.

6. An apparatus as claimed in claim 5 wherein the shell has a wall thickness between 30 and 150 µm.

7. An apparatus as claimed in any one of the preceding claims also comprising a third electrode adjacent to and alongside a first one of the electrodes and separated from the first electrode by dielectric material, the welding taking place between the first and a second electrode, and the third electrode being held at an electric potential substantially that of the second electrode.

8. An apparatus as claimed in any one of the preceding claims and suitable for welding a thin layer of material to a thicker layer of material, wherein the electrode which in use contacts the thin layer has a narrower working surface than that of the electrode which in use contacts the thicker layer, and at least the electrode with the narrower working surface comprises the said layer of dielectric material on the working surface and also on surfaces alongside the working surface.

9. An apparatus for dielectric welding of a material, the apparatus comprising an opposed pair of relatively movable electrodes, each electrode incorporating an electrically conducting element with a working surface close to and opposed to the working surface of the electrically conducting element of the other electrode, there being a gap between the electrodes, such that the material to be welded may be placed in the gap and may be pressed between the electrodes, the apparatus also comprising means to supply radio frequency signals to the electrodes, wherein at least one of the electrodes comprises a layer of dielectric material on the working surface and also on surfaces of the conducting element which are alongside the working surface, the gap being defined at least in part by the said layers of dielectric material on the alongside surfaces, the dielectric material on both the entire working surface and the alongside surfaces being in intimate contact with the electrically conducting element, and the electrically conducting element is shaped such that the working surface is, at least in part, convexly curved.
